# FASCICULE DE BREVET EUROPEEN

(11) **EP 2 895 703 B1**
(45) Date de publication et mention de la délivrance du brevet: **07.09.2016**
(21) Numéro de dépôt: 13756612.1
(22) Date de dépôt: 29.07.2013
(51) Int. Cl.: F01D 17/16, F02K 3/06, F04D 29/56

(54) **TURBOMACHINE COMPORTANT UNE PLURALITÉ D'AUBES DE STATOR À CALAGE VARIABLE MONTÉES EN AMONT DE LA SOUFFLANTE**
TURBOMASCHINE MIT MEHREREN STROMAUFWÄRTS DES BLÄSERS MONTIERTEN LEITSCHAUFELN MIT VARIABLER GEOMETRIE
TURBOMACHINE COMPRISING A PLURALITY OF VARIABLE GEOMETRY VANES MOUNTED UPSTREAM OF THE FAN

(30) Priorité: 09.08.2012 FR 1257742
(43) Date de publication de la demande: 22.07.2015
(73) Titulaire: SNECMA, 75015 Paris (FR)
(72) Inventeur: LECORDIX, Jean-Loïc, Hervé, F-77550 Moissy-Cramayel Cedex (FR)
(74) Mandataire: Gevers & Orès
(86) Numéro de dépôt international: PCT/FR2013/051818
(87) Numéro de publication internationale: WO 2014/023891

(56) Documents cités:
- DE-C- 767 258
- FR-A1- 2 360 758
- FR-A1- 2 398 890
- FR-A1- 2 424 999
- FR-A1- 2 688 827
- US-A- 4 072 008
- US-A- 4 080 785
- "Kusnezow NK-93", , 24 juillet 2012 (2012-07-24), XP055061226, Wikipedia Extrait de l'Internet: URL:http://de.wikipedia.org/w/index.php?ti tle=Kusnezow_NK-93&oldid=105952941 [extrait le 2013-04-26]

## Description

### DOMAINE TECHNIQUE GENERAL ET ART ANTERIEUR

La présente invention concerne le domaine des turbomachines à double flux, notamment pour aéronef, dans lequel circulent des flux d'air d'amont en aval.

On connaît une telle turbomachine par la demande FR2902142 de la société SNECMA. De manière classique, en référence à la figure 1, la turbomachine 1 s'étend axialement selon un axe X-X et comporte un carter intérieur 11, un carter inter-veine 12 et un carter extérieur 13 de manière à délimiter une veine primaire V1 entre le carter inter-veine 12 et le carter intérieur 11 et une veine secondaire V2 entre le carter inter-veine 12 et le carter extérieur 13. Autrement dit, la veine secondaire V2 et la veine primaire V1 sont annulaires et sont séparées par le carter inter-veine 12.

La turbomachine 1 comporte un arbre rotatif comportant en amont une soufflante mobile 2 pour comprimer un flux d'air incident F, la soufflante mobile 2 comprenant des aubes radiales 20 dont l'extrémité libre est en regard du carter extérieur 13 de la turbomachine 1 de manière à comprimer un flux d'air au moins dans la veine secondaire V2 et, de préférence, également dans la veine primaire V1. De manière classique, la turbomachine 1 est dite à soufflante carénée.

Le flux d'air circulant dans la veine primaire V1 est classiquement comprimé par des étages de compresseur de la turbomachine 1 avant d'entrer dans la chambre de combustion. L'énergie de combustion est récupérée par des étages de turbine qui participent à l'entraînement des étages de compresseur et de la soufflante mobile amont 2. Le flux d'air circulant dans la veine secondaire V2 participe pour sa part à la poussée de la turbomachine 1.

De manière classique, la veine secondaire V2 comporte, en aval de la soufflante mobile 2, des aubes radiales fixes ou de stator 3 connues de l'homme du métier sous la désignation de « Outlet Guide Vanes (OGV) » pour redresser le flux d'air dévié F₀ par la soufflante mobile 2 au cours de sa rotation. De manière similaire, la veine primaire V1 comporte, en aval de la soufflante mobile 2, des aubes radiales fixes ou de stator 4 connues de l'homme du métier sous la désignation de « Inlet Guide Vanes (IGV) ». Par « aube fixe » ou « aube de stator », on entend une aube qui n'est pas entraînée en rotation autour de l'axe X-X de la turbomachine 1, c'est-à-dire, en opposition à une aube mobile ou de rotor d'un étage de rotor de la turbomachine 1.

L'invention concerne plus particulièrement les turbomachines ayant un fort taux de dilution, c'est-à-dire, un ratio de déviation d'air dans la veine secondaire V2 élevé par rapport au flux d'air dévié dans la veine primaire V1. Le taux de dilution ou « By Pass Ratio (BPR) » est connu de l'homme du métier et dépend de la configuration des carters 11, 12, 13 de la turbomachine (diamètre, écartement radial, etc.). Par la suite, on entend par « fort » taux de dilution, un taux de dilution supérieur à 15. Autrement dit, pour une telle turbomachine 1, le débit d'air dans la veine secondaire V2 est 15 fois supérieur au débit d'air dans la veine primaire V1.

Une turbomachine 1 à fort taux de dilution permet avantageusement d'obtenir une poussée importante pour une consommation en carburant réduite.

Néanmoins, plus on augmente la dimension de la veine secondaire V2, plus on augmente le diamètre du carter extérieur 13 ce qui présente des inconvénients majeurs en termes de masse et de trainée. Un autre inconvénient des turbomachines à grand taux de dilution est qu'il est nécessaire d'augmenter la dimension et la masse des inverseurs de poussée.

Aussi, un objectif principal de l'invention est de proposer une turbomachine ayant une consommation réduite et dont la masse est également réduite.

Par ailleurs, plus le diamètre du carter extérieur 13 est important, plus la longueur des aubes 20 de la soufflante mobile 2 est importante. En pratique, pour une vitesse de rotation des aubes 20 de l'ordre de 400 m/s, le flux d'air dévié par l'extrémité des aubes 20 peut atteindre des vitesses supersoniques, de l'ordre de Mach 1.3 ce qui présente des inconvénients sur le plan acoustique. De plus, une vitesse élevée du flux d'air F₀ dévié par la soufflante mobile 2 génère des ondes de choc dans la turbomachine 1 entraînant une diminution du rendement de compression. Après déviation du flux d'air incident F par la soufflante mobile 2, le flux d'air dévié F₀ dans la veine secondaire V2 comporte une composante axiale et tangentielle et doit être redressé axialement par les aubes radiales fixes 3 du type OGV. La composante tangentielle additionnée à la composante axiale du flux d'air dévié F₀ dans la veine secondaire V2 par une aube 20 de grand diamètre peut être source de nuisances sonores pour une turbomachine 1.

Un autre objectif de l'invention est de proposer une turbomachine ayant un impact acoustique limité.

La demande de brevet FR2360758 presente une autre turbomachine à double flux.

### PRESENTATION GENERALE DE L'INVENTION

Afin d'éliminer au moins certains de ces inconvénients, l'invention concerne une turbomachine à double flux, notamment pour aéronef, dans lequel circulent des flux d'air d'amont en aval, la turbomachine s'étendant axialement et comportant un carter intérieur, un carter inter-veine et un carter extérieur de manière à délimiter une veine primaire entre le carter inter-veine et le carter intérieur et une veine secondaire entre le carter inter-veine et le carter extérieur, un arbre rotatif comportant en amont une soufflante mobile comprenant des aubes radiales dont l'extrémité libre est en regard du carter extérieur de la turbomachine de manière à comprimer un flux d'air au moins dans la veine secondaire, la turbomachine comportant une pluralité d'aubes radiales de stator à calage variable montées en amont de la soufflante mobile, les aubes radiales à calage variable étant configurées pour dévier l'air axial incident et la soufflante mobile étant configurée pour redresser axialement cet air dévié dans la veine secondaire, la turbomachine étant dépourvue d'aubes de stator dans la veine secondaire en aval de la soufflante mobile.

La présence d'aubes radiales de stator en amont de la soufflante mobile permet avantageusement de dévier le flux d'air incident axial préalablement à son redressement par la soufflante mobile de manière à ce que la direction du flux d'air en aval de la soufflante mobile soit uniquement axiale. Aussi, il n'est plus nécessaire de recourir à des aubes de redresseur fixes ou de stator en aval de la soufflante ce qui allège la turbomachine.

Grâce au calage variable des aubes radiales de stator, on adapte le flux d'air incident en fonction des besoins de la turbomachine, c'est-à-dire, de son état de fonctionnement. De plus, dans une position de calage donnée, les aubes radiales de stator permettent de remplir une fonction d'aérofrein. La turbomachine ne nécessite ainsi pas d'inverseur de poussée rapporté sur la turbomachine ce qui allège sa masse et diminue sa complexité.

De manière préférée, les aubes radiales à calage variable possèdent un profil aérodynamique de manière à accélérer le flux d'air incident lors de la déviation par les aubes radiales à calage variable. Autrement dit, les aubes radiales à calage variable permettent un écoulement laminaire du flux d'air. De préférence, le profil aérodynamique des aubes permet une accélération du flux d'air sur au moins 75% de la corde.

De préférence, le carter intérieur, le carter inter-veine et le carter extérieur sont espacés radialement dans la turbomachine de manière à définir une turbomachine comportant un taux de dilution supérieur ou égal à 15. De manière préférée, la vitesse de rotation de l'extrémité libre des aubes de la soufflante mobile est inférieure à 340m/s. Pour les turbomachines à grand taux de dilution, on peut bénéficier d'une grande poussée pour une soufflante mobile entraînée à une vitesse lente, c'est-à-dire, inférieure à 340m/s. De manière avantageuse, on évite l'apparition de vitesses élevées lors de la déviation d'air par les aubes de la soufflante. Grâce à l'invention, on limite les nuisances sonores pour les turbomachines à grand taux de dilution en tirant partie de la vitesse lente de la soufflante mobile.

Selon un aspect préféré de l'invention, la pluralité d'aubes radiales à calage variable s'étend dans un même plan transversal à l'axe de la turbomachine afin de permettre une déviation homogène du flux d'air incident préalablement au redressement par la soufflante mobile.

De préférence, la distance axiale entre la pluralité d'aubes radiales à calage variable et la soufflante mobile est comprise entre 0,1 et 10 fois la corde moyenne d'une aube radiale à calage variable de manière à optimiser le redressement tout en limitant la longueur de la turbomachine et de sa nacelle.

Selon l'invention, la turbomachine ne comporte pas d'aubes de stator montées dans la veine secondaire en aval de la soufflante mobile. Le flux d'air dévié par la soufflante mobile est redressé axialement et ne requiert pas la présence d'aubes radiales en aval ce qui allège la turbomachine et diminue sa complexité. De manière similaire, selon un aspect préféré de l'invention, la turbomachine ne comporte pas d'aubes de stator montées dans la veine primaire en aval de la soufflante mobile.

Selon un aspect de l'invention, les aubes de la soufflante mobile s'étendent uniquement entre le carter intérieur et le carter extérieur de la turbomachine.

Selon un autre aspect de l'invention, les aubes de la soufflante mobile s'étendent entre le carter inter-veine et le carter extérieur de la turbomachine.

De manière préférée, les aubes radiales à calage variable sont adaptées, dans une position de calage donnée, pour obstruer la circulation d'air dans la veine secondaire et autoriser la circulation d'air dans la veine primaire.

De préférence, la turbomachine comporte des moyens de réglage individuel du calage des aubes radiales à calage variable de manière à permettre un calage adaptatif en fonction de la configuration de la turbomachine, par exemple, en présence d'un pylône en aval de la soufflante mobile. Les moyens de réglage permettent avantageusement de modifier localement le calage de certaines aubes radiales à calage variable afin de permettre, par exemple, à une plus grande quantité d'air de circuler et ainsi compenser la présence d'un élément obstruant la circulation d'air en aval de la soufflante mobile.

De préférence encore, la turbomachine comporte des moyens d'asservissement individuel du calage des aubes radiales à calage variable suite à une détection d'une hétérogénéité du flux d'air dans la veine secondaire. Ainsi, en cas de détection d'un vent de travers ou de « Boundary Layer Ingestion », le flux d'air dans la veine secondaire est réhomogènéisé et adapté à l'incidence des aubes mobiles par un calage individuel de chaque aube radial à calage variable afin de limiter le risque de pompage de la turbomachine.

De préférence encore, chaque aube radiale à calage variable possède un profil aérodynamique de manière à accélérer le flux d'air incident selon un écoulement laminaire.

De préférence, chaque aube radiale à calage variable comporte un corps mobile en rotation autour d'un axe radial de manière à conserver un profil identique pour tout état de fonctionnement de la turbomachine. Une telle aube radiale monobloc est simple à fabriquer.

Selon un autre aspect de l'invention, chaque aube radiale à calage variable comporte un corps fixe et un volet mobile, seul le volet étant déplacé en fonction de l'état de fonctionnement de la turbomachine. Une telle aube radiale avec un volet permet de conserver un bord d'attaque orienté de manière identique pour tout état de fonctionnement, seul le bord de fuite étant mobile pour orienter de manière précise le flux d'air sur la soufflante mobile.

De préférence, la section du volet mobile est croissante sur sa longueur de sa tête vers son pied de manière à permettre d'obturer la circulation d'un flux d'air dans la veine secondaire tout en autorisant la circulation d'un flux d'air dans la veine primaire. Ainsi, les aubes radiales à calage variable permettent de remplir une fonction d'aérofrein tout en permettant une alimentation en air de la turbomachine.

### PRESENTATION DES FIGURES

L'invention sera mieux comprise à la lecture de la description qui va suivre, donnée uniquement à titre d'exemple, et se référant aux dessins annexés sur lesquels :
- la figure 1 est une vue en coupe d'une turbomachine à double flux selon l'art antérieur ;
- la figure 2 est une vue en coupe d'une turbomachine à double flux selon l'invention ;
- la figure 3A est une représentation schématique en coupe des aubes de soufflante et des aubes radiales fixes ou de stator pour une turbomachine selon l'art antérieur ;
- la figure 3B est une représentation schématique en coupe des aubes de soufflante et des aubes radiales fixes ou de stator pour une turbomachine selon l'invention ;
- la figure 4 est une représentation schématique en coupe des aubes radiales de stator lors du décollage ;
- la figure 5 est une représentation schématique en coupe des aubes radiales de stator lors de l'inversion de poussée ;
- la figure 6 est une représentation schématique en coupe des aubes radiales de stator lors de leur calage adaptatif ;
- la figure 7A est une représentation schématique de plusieurs positions de calage d'une aube radiale de stator monobloc selon l'invention comportant un corps mobile ;
- la figure 7B est une représentation schématique de plusieurs positions de calage d'une aube radiale de stator selon l'invention comportant un corps fixe et un volet mobile ;
- la figure 8 est une représentation schématique de côté d'une aube radiale de stator selon l'invention comportant un corps fixe et un volet mobile ; et
- la figure 9 est une vue en coupe d'une autre forme de réalisation d'une turbomachine à double flux selon l'invention.

Il faut noter que les figures exposent l'invention de manière détaillée pour mettre en oeuvre l'invention, lesdites figures pouvant bien entendu servir à mieux définir l'invention le cas échéant.

### DESCRIPTION D'UN OU PLUSIEURS MODES DE REALISATION ET DE MISE EN OEUVRE

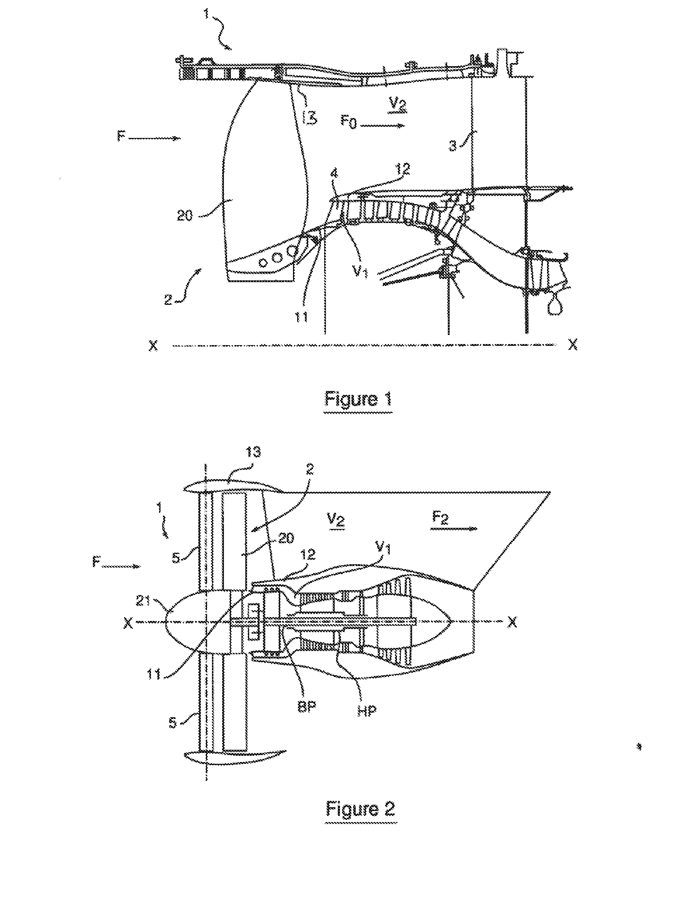

En référence à la figure 2 représentant de manière schématique une turbomachine selon l'invention pour aéronef, la turbomachine 1 s'étend axialement selon un axe X-X et comporte un carter intérieur 11, un carter inter-veine 12 et un carter extérieur 13 de manière à délimiter une veine primaire V1 entre le carter inter-veine 12 et le carter intérieur 11 et une veine secondaire V2 entre le carter inter-veine 12 et le carter extérieur 13. Autrement dit, la veine secondaire V2 et la veine primaire V1 sont annulaires et sont séparées par le carter inter-veine 12.

La turbomachine 1 comporte dans cet exemple un arbre rotatif basse pression BP et un arbre rotatif haute pression HP, l'arbre rotatif basse pression BP comportant en amont une soufflante mobile 2 comprenant des aubes radiales 20 dont l'extrémité libre est en regard du carter extérieur 13 de la turbomachine de manière à comprimer un flux d'air incident F au moins dans la veine secondaire V2. Dans l'exemple de la figure 2, la soufflante mobile 2 accélère un flux d'air dans la veine secondaire V2 et dans la veine primaire V1.

Le flux d'air circulant dans la veine primaire V1 est classiquement comprimé par des étages de compresseur avant d'entrer dans la chambre de combustion. L'énergie de combustion est récupérée par des étages de turbine qui assurent l'entraînement des étages de compresseur et de la soufflante mobile amont 2. Le flux d'air circulant dans la veine secondaire V2 participe pour sa part à fournir la poussée de la turbomachine 1. Dans cet exemple, la turbomachine 1 possède un fort taux de dilution, c'est-à-dire, supérieur à 15. Pour fournir une poussée voulue avec une turbomachine ayant un grand taux de dilution, il est avantageusement possible de réduire la vitesse de rotation de la soufflante mobile 2 à des vitesses inférieures à 340 m/s, par exemple, de l'ordre de 250 m/s à 300 m/s.

Selon l'invention, la turbomachine 1 comporte une pluralité d'aubes radiales fixes ou de stator 5 montées en amont de la soufflante mobile 2 de manière à dévier l'air axial incident F préalablement à son redressement axial par la soufflante mobile 2 dans la veine secondaire V2 comme illustré à la figure 2. A titre d'exemple, la turbomachine comporte au moins vingt aubes radiales de stator 5 réparties circonférentiellement. En référence à la figure 2, les aubes radiales de stator 5 s'étendent dans un même plan transversal à l'axe de la turbomachine 1 entre le carter intérieur 11 et le carter extérieur 13 de la turbomachine 1 de manière à dévier entièrement le flux axial incident F reçu par la turbomachine 1.

Dans cet exemple, la turbomachine 1 comporte, en amont de la soufflante 2, un cône axial fixe 21 qui est solidaire du carter intérieur 11 et dans lequel est montée la pluralité d'aubes radiales de stator 5. De préférence, la distance axiale entre la pluralité d'aubes radiales de stator 5 et la soufflante mobile 2 est comprise entre 0,1 et 10 fois la corde moyenne d'une aube radiale de stator de manière à optimiser le redressement. De manière avantageuse, cela permet de diminuer la distance entre les aubes radiales de stator 5 et la soufflante mobile 2 afin de former une turbomachine plus compacte. En outre, du fait de la compacité de la turbomachine 1, celle-ci peut intégrer une nacelle de dimensions réduites en lieu et place du carter extérieur 13, c'est-à-dire, du carter de soufflante.

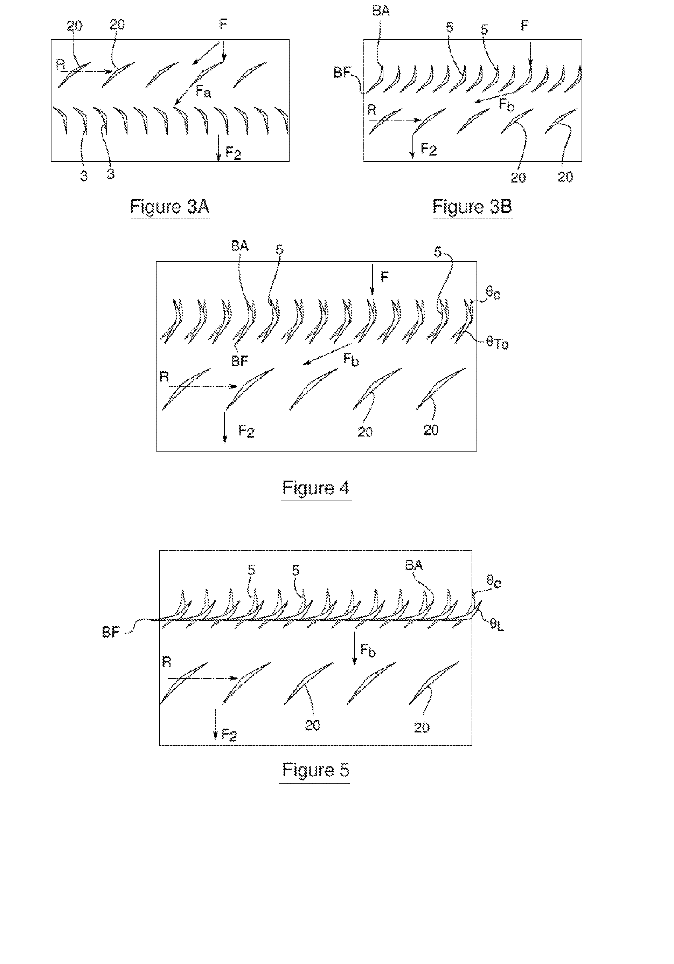

Dans l'art antérieur, comme illustré sur la figure 3A, le flux d'air axial incident F reçu par la turbomachine 1 était tout d'abord comprimer par les aubes 20 de la soufflante 2 en rotation selon la direction R de manière à ce que le flux dévié Fa comporte une composante axiale et tangentielle. Ensuite, le flux dévié Fa était redressé axialement par des aubes radiales de stator 3 du type OGV, en aval de la soufflante mobile 2, de manière à ce que le flux d'air F2 circulant dans la veine secondaire V2 soit orienté axialement comme représenté à la figure 3A.

Selon l'invention, la présence d'aubes radiales de stator 5 en amont de la soufflante 2 permet de dévier le flux d'air incident F préalablement à sa compression par la soufflante mobile 2. En effet, comme illustré à la figure 3B, la pluralité d'aubes radiales de stator 5 montées en amont de la soufflante mobile 2 permettent de dévier le flux d'air incident F de manière à ce que le flux d'air dévié Fb comporte une composante axiale et tangentielle. Ensuite, le flux d'air dévié Fb est redressé axialement par les aubes mobiles 20 et comprimé de manière à ce que le flux d'air F2 circulant dans la veine secondaire V2 soit orienté axialement comme représenté à la figure 3B. De manière avantageuse, le flux d'air F2 en sortie de soufflante 2 ne comporte majoritairement qu'une composante axiale.

Dans cet exemple, chaque aube radiale de stator 5 possède une forme allongée, de préférence tridimensionnelle, s'étendant selon une direction radiale. Chaque aube radiale de stator 5 possède une corde sensiblement constante sur sa longueur. De préférence, chaque aube radiale de stator 5 comporte un corps aérodynamique ayant un bord d'attaque BA et un bord de fuite BF de manière à, d'une part, dévier tout flux d'air incident F reçu par l'aube radiale de stator 5 et, d'autre part, accélérer le flux d'air incident de manière continue pour garder un écoulement laminaire. De préférence, le profil permet une accélération du flux d'air incident sur au moins 75% de la corde de l'aube.

L'aube radiale de stator 5 comporte un pied monté dans le carter inter-veine 12 et une tête montée dans le carter extérieur 13 par des moyens de liaison du type vis-écrou mais il va de soi que d'autres moyens de liaison pourraient également convenir.

Selon l'invention, les aubes radiales de stator 5 sont à calage variable de manière à permettre une déviation optimale du flux d'air incident F pour tout état de fonctionnement de la turbomachine (décollage TO (Figure 4), croisière C (Figure 3B) ou freinage L (Figure 5)). Par calage variable, on entend l'orientation de l'aube de stator 5 ou d'une partie de l'aube de stator 5 autour d'un axe sensiblement radial.

De manière préférée, l'angle de calage ⊖ est défini par asservissement (passif ou actif) en fonction de l'état de fonctionnement de la turbomachine 1. Dans cet exemple, l'angle de calage ⊖ est déterminé par un calculateur embarqué à la turbomachine puis communiqué à un dispositif d'actionnement qui modifie le calage de l'aube au cours du fonctionnement de la turbomachine 1. A titre d'exemple, le dispositif d'actionnement comporte un vérin qui déplace une roue de calage à laquelle sont reliées les aubes radiales de stator 5 par une pluralité de bielles. Il va de soi que le dispositif d'actionnement pourrait se présenter sous diverses formes.

En référence à la figure 3B, l'angle de calage lors du fonctionnement en croisière de la turbomachine 1 est déterminé en fonction de la vitesse de rotation de la soufflante 20 en croisière de manière ce que le flux d'air en aval F2 circule axialement dans la veine secondaire V2 pour fournir une poussée optimale. Dans cet exemple, le bord de fuite BF des aubes radiales de stator 5 est dirigé obliquement par rapport à un plan radial comme illustré à la figure 3B. Par la suite, l'angle de calage en croisière ⊖_{c} est utilisé comme angle de calage de référence et est représenté en pointillés sur les figures 4 à 6.

En référence à la figure 4, lors du décollage, la turbomachine 1 requiert une grande quantité d'air. A cet effet, l'angle de calage ⊖_{TO} lors du décollage est adapté pour favoriser une circulation axiale du flux d'air Fb dévié par les aubes radiales de stator 5. Dans cet exemple, le bord de fuite BF des aubes radiales de stator 5 est augmenté, c'est-à-dire rapproché de la position axiale afin de réduire la déviation initiale, comme illustré à la figure 4. Ainsi, le flux d'air incident F est moins dévié par les aubes radiales de stator 5 ce qui favorise un débit d'air important pour alimenter la veine secondaire V2.

En référence à la figure 5, lors d'un freinage de l'avion et pour assurer l'inversion de poussée, la turbomachine 1 requiert une faible quantité d'air. A cet effet, l'angle de calage ⊖_{L} est adapté pour limiter la circulation axiale du flux d'air Fb dévié par les aubes radiales de stator 5. Dans cet exemple, le bord de fuite BF des aubes radiales de stator 5 est dirigé circonférentiellement, c'est-à-dire, en direction du plan transversal à l'axe de la turbomachine comme illustré à la figure 5 afin de limiter (voire annuler) la quantité d'air fournie à la soufflante mobile 2. Les aubes radiales de stator 5 avec un tel angle de calage ⊖_{L} permettent en outre de former une surface plane transversale qui permet d'entrer en opposition avec le flux d'air incident F lors du freinage. En d'autres termes, les aubes radiales de stator 5 forment un aérofrein ce qui est très avantageux et évite l'utilisation de dispositifs auxiliaires de masse et d'encombrement importants (inverseur de poussée, etc.).

De manière préférée, lorsque les aubes de stator 5 sont calées pour le freinage de l'avion, un flux d'air incident F peut toujours circuler dans la veine primaire V1 afin de permettre le fonctionnement de la turbomachine 1. Une telle fonction est par exemple obtenue au moyen d'aubes radiales de stator tridimensionnelles 5 qui coopèrent ensemble pour l'angle de calage ⊖_{L} afin de former un plan d'obturation de la veine secondaire V2 tout en autorisant la circulation du flux d'air dans la veine primaire V1.

De préférence, chaque aube radiale de stator 5 possède le même angle de calage ⊖ pour un mode de fonctionnement donné.

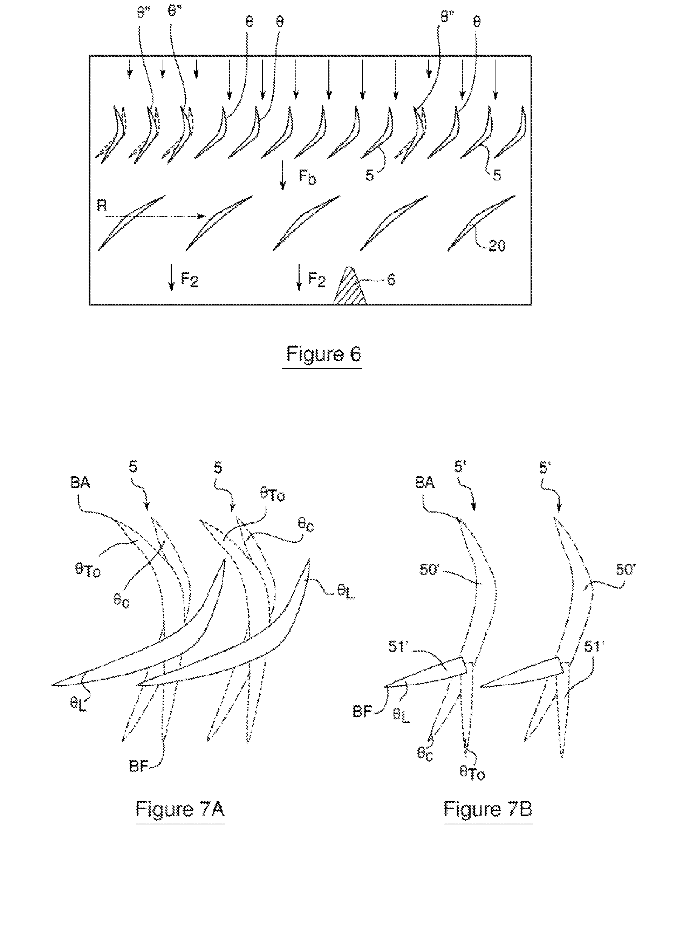

Selon un aspect de l'invention, chaque aube radiale de stator 5 ne possède pas le même angle de calage ⊖. En référence à la figure 6, le calage des aubes radiales de stator 5 est réalisé de manière adaptative afin que le flux d'air F2 circulant dans la veine secondaire V2 s'étende axialement de manière à limiter des phénomènes de pompage de la turbomachine. De préférence, la turbomachine 1 comporte des moyens de réglage individuel du calage des aubes radiales de stator 5 de manière à permettre un calage adaptatif en fonction de la configuration de la turbomachine 1, par exemple, en présence d'un pylône 6 en aval de la soufflante mobile.

Comme illustré à la figure 6, lorsque la turbomachine comporte des éléments qui limitent la circulation d'air en aval de la soufflante 2, on adapte l'angle de calage ⊖ des aubes de stator 5 alignées sensiblement longitudinalement avec ces éléments. En effet, comme les aubes de stator 5 réalisent une déviation tangentielle de flux d'air incident, les aubes concernées par un calage adaptatif dépendent de l'angle de calage courant ⊖.

A titre d'exemple, l'aube radiale de stator 5 alignée sensiblement longitudinalement avec un pylône 6 de la turbomachine 1 possède un angle de calage ⊖' qui est différent de celui des angles de calage ⊖ des autres aubes radiales de stator 5. En effet, l'angle de calage ⊖' est réduit de manière à permettre à une plus grande quantité d'air de circuler dans la turbomachine 1 afin de compenser la perturbation du pylône 6. Autrement dit, malgré la présence du pylône 6, le flux d'air axial F2 circulant dans la veine secondaire V2 est homogène en aval de la soufflante.

De préférence encore, la turbomachine 1 comporte des moyens d'asservissement du calage des aubes radiales de stator en fonction de la détection d'une hétérogénéité du flux d'air dans la veine secondaire V2. Ainsi, si le pilote de l'aéronef, sur lequel est montée la turbomachine, détecte une telle hétérogénéité, il peut commander les moyens d'asservissement pour compenser cette hétérogénéité. Par exemple, en cas de distorsion de l'écoulement amont (vent de travers ou de « Boundary Layer Ingestion »), le flux d'air dans la veine secondaire V2 en aval de la soufflante est homogène grâce à l'adaptation. Un tel calage adaptatif circonférentiel permet avantageusement de limiter les risques de décrochage ou de pompage de la turbomachine 1 ce qui améliore ses performances ainsi que sa sécurité.

Le calage des aubes radiales de stator 5 peut être réalisé de manière individuelle ou de manière groupée, par exemple, une pluralité d'aubes consécutives ayant le même calage. Autrement dit, les aubes de stator sont calées « bloc par bloc ».

Il a été présenté précédemment des moyens de calage variable des aubes radiales de stator 5 de la turbomachine 1. Selon une première forme de réalisation, chaque aube radiale de stator 5 comporte un corps mobile monobloc en rotation autour d'un axe radial (Figure 7A). Ainsi, en fonction de l'état de fonctionnement de la turbomachine 1, l'ensemble de l'aube radiale de stator 5 s'oriente autour de son axe selon lequel elle s'étend pour se caler selon les angles de calage en croisière ⊖_{C}, au décollage ⊖_{TO} ou lors d'un ralentissement ⊖_{L}.

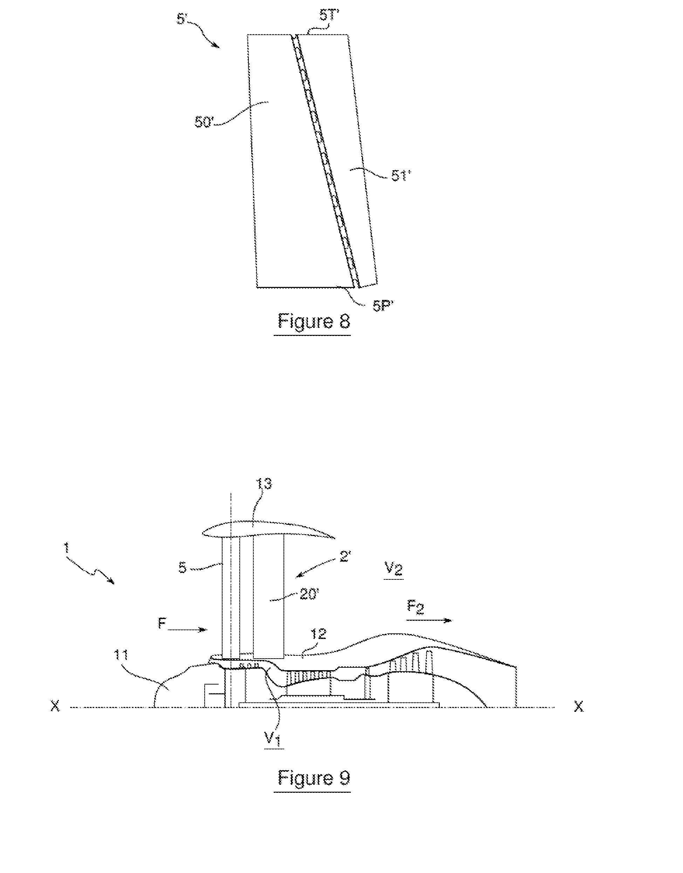

Selon une deuxième forme de réalisation, chaque aube radiale de stator 5' comporte un corps fixe 50' et un volet mobile 51' comme illustré aux figures 7B et 8. De manière préférée, le volet 51' comporte le bord de fuite BF de l'aube radiale 5' et est articulé autour d'un axe sur le corps 50' de l'aube 5' qui demeure fixe. Dans cet exemple, le volet mobile 51' possède une section croissante sur sa longueur comme illustré à la figure 8. De préférence, la section est croissante du pied 5P' de l'aube de stator 5 jusqu'à sa tête 5T' comme illustré à la figure 8 de manière à permettre une obturation de la veine secondaire V2 en position de calage ⊖_{L} à l'atterrissage tout en autorisant une alimentation de la veine primaire V1.

Selon une autre forme de réalisation de l'invention, en référence à la figure 9, la soufflante mobile 2' comporte des aubes mobiles 20' qui s'étendent radialement entre le carter inter-veine 12 et le carter extérieur 13 de manière à comprimer un flux d'air uniquement dans la veine secondaire V2, la veine primaire V1 ne recevant pas de flux d'air comprimé par la soufflante mobile 2'. Il en résulte que les aubes radiales de stator 5 sont montées entre le carter inter-veine 12 et le carter extérieur 13 pour dévier le flux d'air incident F préalablement à leur compression par la soufflante mobile 2'. Il va de soi que les aubes radiales de stator 5 peuvent être monobloc ou comporter un volet mobile dans cette configuration de la turbomachine 1.

## Revendications

1. Turbomachine (1) à double flux, notamment pour aéronef, dans lequel circulent des flux d'air d'amont en aval, la turbomachine (1) s'étendant axialement et comportant :
- un carter intérieur (11), un carter inter-veine (12) et un carter extérieur (13) de manière à délimiter une veine primaire (V1) entre le carter inter-veine (12) et le carter intérieur (11) et une veine secondaire (V2) entre le carter inter-veine (12) et le carter extérieur (13),
- un arbre rotatif (BP) comportant en amont une soufflante mobile (2) comprenant des aubes radiales (20) dont l'extrémité libre est en regard du carter extérieur (13) de la turbomachine de manière à comprimer un flux d'air au moins dans la veine secondaire (V2),
- une pluralité d'aubes radiales de stator à calage variable (5) montées en amont de la soufflante mobile (2), ces aubes à calage variable étant configurées pour dévier l'air axial incident (F)
turbomachine (1) **caractérisée par le fait que**
la soufflante mobile est configurée pour redresser axialement cet air dévié dans la veine secondaire (V2), la turbomachine étant dépourvue d'aubes de stator dans la veine secondaire (V2) en aval de la soufflante mobile (2).

2. Turbomachine selon la revendication 1, dans laquelle le carter intérieur (11), le carter inter-veine (12) et le carter extérieur (13) sont espacés radialement dans la turbomachine (1) de manière à définir une turbomachine (1) comportant un taux de dilution (BPR) supérieur ou égal à 15.

3. Turbomachine selon l'une des revendications 1 à 2, dans laquelle la vitesse de rotation de l'extrémité libre des aubes (20) de la soufflante mobile (2) est inférieure à 340m/s.

4. Turbomachine selon l'une des revendications 1 à 3, dans laquelle la pluralité d'aubes radiales à calage variable (5) s'étend dans un même plan transversal à l'axe de la turbomachine (1).

5. Turbomachine selon l'une des revendications 1 à 4, dans laquelle la distance axiale entre la pluralité d'aubes radiales à calage variable (5) et la soufflante mobile (2) est comprise entre 0,1 et 10 fois la corde moyenne d'une aube radiale à calage variable (5).

6. Turbomachine selon l'une des revendications 1 à 5, dans laquelle les aubes (20) de la soufflante mobile (2) s'étendent entre le carter intérieur (11) et le carter extérieur (13) de la turbomachine (1).

7. Turbomachine selon l'une des revendications 1 à 6, dans laquelle chaque aube radiale à calage variable (5) possède un profil aérodynamique de manière à accélérer le flux d'air incident selon un écoulement laminaire.

8. Turbomachine selon l'une des revendications 1 à 7, dans laquelle chaque aube radiale à calage variable (5) comporte un corps mobile en rotation autour d'un axe radial.

9. Turbomachine selon l'une des revendications 1 à 7, dans laquelle chaque aube radiale à calage variable (5') comporte un corps fixe (50') et un volet mobile (51').

10. Turbomachine selon l'une des revendications 1 à 9, dans laquelle chaque aube radiale à calage variable (5) est configurée pour assurer une fonction d'aérofrein dans une position de calage donnée.

## Patentansprüche

1. Doppelstrom-Turbomaschine (1), insbesondere für Luftfahrzeuge, in der Luftströme von stromaufwärts nach stromabwärts zirkulieren, wobei sich die Turbomaschine (1) in axialer Richtung erstreckt und Folgendes umfasst:
- ein inneres Gehäuse (11), ein Zwischenstromgehäuse (12) und ein äußeres Gehäuse (13), derart, dass ein Primärstrom (V1) zwischen dem Zwischenstromgehäuse (12) und dem inneren Gehäuse (11) und ein Sekundärstrom (V2) zwischen dem Zwischenstromgehäuse (12) und dem äußeren Gehäuse (13) abgegrenzt werden,
- eine drehbare Welle (BP), welche stromaufwärts einen beweglichen Lüfter (2) umfasst, der radiale Schaufeln (20) umfasst, deren freies Ende dem äußeren Gehäuse (13) der Turbomaschine derart gegenüber liegt, dass ein Luftstrom wenigstens in dem Sekundärstrom (V2) komprimiert wird,
- mehrere radiale Statorschaufeln mit variabler Feststellposition (5), die stromaufwärts von dem beweglichen Lüfter (2) montiert sind, wobei diese Schaufeln mit variabler Feststellposition eingerichtet sind, um die axiale einfallende Luft (F) umzulenken,
Turbomaschine (1) **dadurch gekennzeichnet, dass**
der bewegliche Lüfter eingerichtet ist, um die in dem Sekundärstrom (V2) umgeleitete Luft axial zu begradigen, wobei die Turbomaschine keine Statorschaufeln in dem Sekundärstrom (V2) stromaufwärts von dem beweglichen Lüfter (2) aufweist.

2. Turbomaschine nach Anspruch 1, wobei das innere Gehäuse (11), das Zwischenstromgehäuse (12) und das äußere Gehäuse (13) derart radial in der Turbomaschine (1) voneinander beabstandet sind, dass sie eine Turbomaschine (1) bilden, die ein Nebenstromverhältnis (BPR) aufweist, das größer als oder gleich 15 ist.

3. Turbomaschine nach einem der Ansprüche 1 oder 2, wobei die Drehgeschwindigkeit des freien Endes der Schaufeln (20) des mobilen Lüfters (2) niedriger als 340m/s ist.

4. Turbomaschine nach einem der Ansprüche 1 bis 3, wobei sich die mehreren radialen Schaufeln mit variabler Feststellposition (5) in einer gleichen Ebene quer zur Achse der Turbomaschine (1) erstrecken.

5. Turbomaschine nach einem der Ansprüche 1 bis 4, wobei der axiale Abstand zwischen den mehreren radialen Schaufeln mit variabler Feststellposition (5) und dem mobilen Lüfter (2) zwischen dem 0,1- bis 10-fachen der mittleren Spannweite einer radialen Schaufel mit variabler Feststellposition (5) liegt.

6. Turbomaschine nach einem der Ansprüche 1 bis 5, wobei sich die Schaufeln (20) des beweglichen Lüfters (2) zwischen dem inneren Gehäuse (11) und dem äußeren Gehäuse (13) der Turbomaschine (1) erstrecken.

7. Turbomaschine nach einem der Ansprüche 1 bis 6, wobei jede radiale Schaufel mit variabler Feststellposition (5) ein aerodynamisches Profil besitzt, derart, dass es den einfallenden Luftstrom entlang einer laminaren Strömung beschleunigt.

8. Turbomaschine nach einem der Ansprüche 1 bis 7, wobei jede radiale Schaufel mit variabler Feststellposition (5) einen Körper umfasst, der um eine radiale Achse drehbar beweglich ist.

9. Turbomaschine nach einem der Ansprüche 1 bis 7, wobei jede radiale Schaufel mit variabler Feststellposition (5') einen festen Körper (50') und eine bewegliche Klappe (51') umfasst.

10. Turbomaschine nach einem der Ansprüche 1 bis 9, wobei jede radiale Schaufel mit variabler Feststellposition (5) ausgebildet ist, um in einer bestimmten Position der Feststellposition eine Funktion einer Luftbremse zu gewährleisten.

## Claims

1. Bypass turbine engine (1), in particular for an aircraft, in which air flows circulate from upstream to downstream, the turbine engine (1) extending axially and comprising:
- an inner casing (11), an inter-duct casing (12) and an outer casing (13) so as to define a primary duct (V1) between the inter-duct casing (12) and the inner casing (11), and a secondary duct (V2) between the inter-duct casing (12) and the outer casing (13),
- a rotary shaft (BP) comprising, at the upstream end, a movable fan (2) comprising radial blades (20) of which the free ends face the outer casing (13) of the turbine engine so as to compress an air flow at least in the secondary duct (V2),
- a plurality of variable-pitch radial stator vanes (5) mounted upstream of the movable fan (2), said variable-pitch vanes being configured to deflect the incident axial air (F)
said turbine engine (1) is **characterised in that** the movable fan is configured to axially rectify said air deflected in the secondary duct (V2), the turbine engine not being provided with stator vanes in the secondary duct (V2) downstream of the movable fan (2).

2. Turbine engine according to claim 1, wherein the inner casing (11), the inter-duct casing (12) and the outer casing (13) are at a radial distance from one another in the turbine engine (1) so as to define a turbine engine (1) having a bypass ratio (BPR) that is greater than or equal to 15.

3. Turbine engine according to either claim 1 or claim 2, wherein the rotational speed of the free ends of the blades (20) of the movable fan (2) is less than 340 m/s.

4. Turbine engine according to any of claims 1 to 3, wherein the plurality of variable-pitch radial vanes (5) extend in the same plane which is transverse to the axis of the turbine engine (1).

5. Turbine engine according to any of claims 1 to 4, wherein the axial distance between the plurality of variable-pitch radial vanes (5) and the movable fan (2) is between 0.1 and 10 times the mean chord of a variable-pitch radial vane (5).

6. Turbine engine according to any of claims 1 to 5, wherein the blades (20) of the movable fan (2) extend between the inner casing (11) and the outer casing (13) of the turbine engine (1).

7. Turbine engine according to any of claims 1 to 6, wherein each variable-pitch radial vane (5) has an aerodynamic profile so as to accelerate the incident air flow in accordance with a laminar flow.

8. Turbine engine according to any of claims 1 to 7, wherein each variable-pitch radial vane (5) has a body which is movable in rotation about a radial axis.

9. Turbine engine according to any of claims 1 to 7, wherein each variable-pitch radial vane (5') has a fixed body (50') and a movable flap (51').

10. Turbine engine according to any of claims 1 to 9, wherein each variable-pitch radial vane (5) is configured to ensure an air-brake function in a given pitch position.
